# EUROPÄISCHE PATENTSCHRIFT

(11) **EP 1 792 066 B1**
(45) Veröffentlichungstag und Bekanntmachung des Hinweises auf die Patenterteilung: **22.12.2010**
(21) Anmeldenummer: 05787618.7
(22) Anmeldetag: 09.09.2005
(51) Int. Cl.: F02B 29/04, F28F 3/02, F28D 9/00

(54) **LADELUFTKÜHLER, INSBESONDERE FÜR KRAFTFAHRZEUGE**
CHARGE-AIR COOLER, IN PARTICULAR FOR A MOTOR VEHICLES
REFROIDISSEUR D'AIR DE SURALIMENTATION, EN PARTICULIER POUR VEHICULES AUTOMOBILES

(30) Priorität: 13.09.2004 DE 102004044591; 12.10.2004 DE 102004049810
(43) Veröffentlichungstag der Anmeldung: 06.06.2007
(73) Patentinhaber: Behr GmbH & Co. KG, 70469 Stuttgart (DE)
(72) Erfinder: HENDRIX, Daniel, 70374 Stuttgart (DE)
(74) Vertreter: Mantel, Berthold Friedrich
(86) Internationale Anmeldenummer: PCT/EP2005/009681
(87) Internationale Veröffentlichungsnummer: WO 2006/029761

(56) Entgegenhaltungen:
- EP-A- 1 243 886
- DE-A1- 2 322 730
- DE-A1- 2 342 787
- DE-A1- 3 906 747
- DE-A1- 19 511 991
- DE-A1- 19 519 633
- DE-A1- 19 927 607
- DE-U1- 9 490 288
- US-A- 3 601 185
- US-A1- 2002 185 265

## Beschreibung

Die Erfindung betrifft einen Ladeluftkühler, insbesondere für Kraftfahrzeuge nach dem Oberbegriff des Patentanspruches 1 - bekannt durch die DE-A 199 27 607 der Anmelderin.

Bei dem durch die DE-A 199 27 607 bekannt gewordenen Ladeluftkühler wird die Ladeluft durch ein flüssiges Kühlmittel gekühlt, wobei die Ladeluft einen Stapel von Flachrohren durchströmt, das Kühlmittel in einem Gehäusemantel geführt ist und die Flachrohre auf deren Außenseite umströmt. Innerhalb der Flachrohre sind zur Erhöhung des ladeluftseitigen Wärmeüberganges Wellprofile, so genannte Innenrippen angeordnet. Ladeluft und Kühlmittel sind im Wesentlichen im Gegenstrom geführt, lediglich in den Ein- und Austrittsbereichen der Flachrohre erfolgt eine Querströmung des Kühlmittels, bedingt durch die seitlich am Gehäuse angeordneten Kühlmittelstutzen. Infolge dieser Strömungsausbildung trifft die erhitzte Ladeluft beim Eintritt in die Flachrohre auf ein bereits erwärmtes Kühlmittel, so dass sich aufgrund der relativ geringen Temperaturdifferenz im Eintrittsbereich der Ladeluft eine starke Erhitzung des flüssigen Kühlmittels ergeben kann, die teilweise auch zum lokalen Sieden des Kühlmittels führt, was in jedem Fall zu vermeiden ist.

Zur Lösung dieses Problems wurde in der DE-A 39 06 747 der Anmelderin für einen gattungsfremden Ladeluftkühler vorgeschlagen, im Eintrittsbereich der Ladeluft Wellrippen mit einer geringeren Rippendichte anzuordnen als in dem stromabwärtigen Bereich der Ladeluftströmung. Damit wird der Wärmeübergang im Eintrittsbereich der Ladeluft verschlechtert und demzufolge weniger Wärme auf das durch Rohre strömende Kühlmittel übertragen. Nachteilig bei dieser Lösung ist, dass zwei verschiedene Arten von Wellrippen, nämlich mit hoher und geringer Rippendichte beim Aufbau des bekannten Rippenrohrblockes montiert und gelötet werden müssen.

In der DE-A 23 42 787 ist eine weitere Lösung dieses Problems für einen Ladeluftkühler beschrieben, welcher aus Rippenrohren aufgebaut ist, welche von Kühlmittel durchströmt werden, welches über kreisringförmige Rippen am Außenumfang der Rohre die zwischen den Rohren strömende Ladeluft kühlt. Um eine Überhitzung des Kühlwassers in den Rohren zu vermeiden, ist unter anderem vorgesehen, die ersten Rohrreihen, die von Ladeluft beaufschlagt werden, rippenlos auszuführen. Nachteilig hierbei ist, dass verschiedene Arten von Kühlrohren verbaut werden müssen.

Weiterhin offenbaren die DE 9490288 U1 und die US 3,601,185 Wärmetauscher, die als Ladeluftkühler eingesetzt werden können und die im Eintritts- und/oder Austrittsbereich eine innenrippenfreie Zone aufweisen.

Es ist Aufgabe der vorliegenden Erfindung, für einen Ladeluftkühler der eingangs genannten Art eine Überhitzung des Kühlmittels mit einfachen Mitteln, d. h. ohne Mehraufwand zu vermeiden.

Die Lösung dieser Aufgabe ergibt sich aus den Merkmalen des Patentanspruches 1. Erfindungsgemäß ist vorgesehen, dass die Innenrippe im Strömungskanal für die Ladeluft kürzer als der gesamte Strömungskanal ist. Damit ergibt sich im Eintritts- und/oder Austrittsbereich des Ladeluftströmungskanales eine innenrippenfreie Zone, welche einen reduzierten Wärmeübergang an der Kanalwandung zur Folge hat. Das außerhalb der Strömungskanäle strömende Kühlmittel wird somit im Eintritts- und/oder Austrittsbereich weniger erwärmt, damit werden lokale Überhitzungen, insbesondere ein Sieden des Kühlmittels wirksam vermieden. Die erfindungsgemäße Lösung ist außerordentlich einfach, da bisher verwendete Innenrippen lediglich gekürzt werden müssen. Die Strömungskanäle sind vorzugsweise als Flachrohre oder Stapelscheiben ausgebildet.

Erfindungsgemäß ist der rippenfreie Bereich bzw. die innenrippenfreie Zone relativ kurz bemessen, d. h. etwa zwischen 5 und 15 mm, vorzugsweise ca. 10 mm - bei einer Gesamtlänge des Strömungskanals von etwa 100 bis 400 mm. Da diese Zone relativ kurz ist, ergeben sich für den Strömungskanal, der insbesondere als Flachrohr oder Stapelscheibe ausgebildet ist, auch keine Festigkeitsprobleme (die Innenrippe wirkt infolge ihrer Verlötung mit dem Flachrohr oder der Stapelscheibe auch als Zuganker).

In einer weiteren vorteilhaften Ausgestaltung der Erfindung ist die Strömung des Kühlmittels im Bereich der innenrippenfreien Zonen quer zur Längsrichtung bzw. quer zur Ladeluftströmung geführt, d. h. in Richtung auf die beiden Kühlmittelanschlüsse, die seitlich am Gehäuse angeordnet sind. Die rippenfreie Zone kommt dieser Strömungsführung, die mit einer Verringerung der Kühlmittelströmungsgeschwindigkeit verbunden ist, zugute, d. h. sie ist insofern von Vorteil, als sich anderenfalls eine zu starke Erwärmung der quer verlaufenden Kühlmittelströmung ergeben würde.

Die erfindungsgemäße Lösung mit innenrippenfreien Zonen beim Ladelufteintritt bzw. -austritt ist - wie erwähnt - nicht auf Ladeluftkühler mit Flachrohren beschränkt, sondern gilt auch für ähnliche Strömungskanäle, insbesondere für Stapelscheiben in Ladeluftkühlern in Stapelbauweise, wie sie z. B. durch die DE-A 195 11 991 der Anmelderin bekannt wurden. Auch dort sind in den Strömungskanälen für die Ladeluft Innenrippen bzw. Turbulenzeinlagen vorgesehen, welche im Ein- und Austrittsbereich erfindungsgemäß durch rippenfreie Zonen ersetzt werden können.

Ausführungsbeispiele der Erfindung sind in der Zeichnung dargestellt und werden im Folgenden näher beschrieben. Es zeigen
- Fig. 1: einen Ausschnitt eines Ladeluftkühlers gemäß dem Stand der Technik,
- Fig. 2: einen Ausschnitt eines erfindungsgemäßen Ladeluftkühlers,
- Fig. 3: ein Flachrohr mit erfindungsgemäßer Innenrippe für die Ladeluft,
- Fig. 3a: eine Draufsicht auf das Flachrohr gemäß Fig. 3.,
- Fig. 4: ein Flachrohr mit Strömungsbild,
- Fig. 5: ein Diagramm der Kühlmitteltemperatur, aufgetragen über der Strömungslänge,
- Fig. 6: eine Stapelscheibe mit erfindungsgemäßer Innenrippe für die Ladeluft und
- Fig. 7: einen Schnitt in der Ebene VII-VII in Fig. 6.

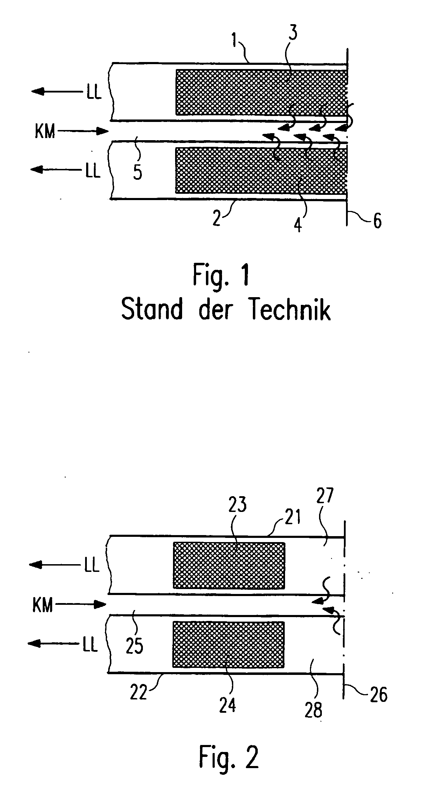

**Fig. 1** zeigt einen Ausschnitt eines Ladeluftkühlers nach dem Stand der Technik, und zwar den Eintrittsbereich der Ladeluft in zwei Ladeluftrohre 1, 2, innerhalb welcher sich (grau angelegt) Innenrippen 3, 4 befinden, welche bis an die Vorderkante der beiden Rohre 1, 2 reichen. Zwischen den Ladeluftrohren 1, 2 befindet sich ein Spalt 5, welcher von Kühlmittel durchströmt wird. Die Strömungsrichtungen von Ladeluft und Kühlmittel sind durch entgegengesetzt gerichtete Pfeile LL und KM dargestellt, d. h. es liegt Gegenstrom vor. Die heiße, in die Ladeluftrohre 1, 2 eintretende Ladeluft gibt ihre Wärme an das Kühlmittel ab, was durch jeweils drei Pfeile dargestellt ist. Dabei wird die Höhe des Wärmeeintrages in das Kühlmittel durch die bis an die Vorderkante bzw. Eintrittsebene 6 ragenden Innenrippen unterstützt. Somit ergibt sich im Eintrittsbereich der Ladeluft eine relativ starke Erhitzung des Kühlmittels, insbesondere, wenn dieses aufgrund des Gegenstromes zur Ladeluft bereits vorgewärmt ist, d. h. eine deutlich über der Eintrittstemperatur liegende Temperatur aufweist.

**Fig. 2** zeigt den Eintrittsbereich der Ladeluft für eine erfindungsgemäße Ausführung, wobei der gleiche Ausschnitt mit gleichen Strömungspfeilen LL und KM wie in Fig. 1 dargestellt ist und gleiche Teile gleiche Endziffern aufweisen. Die Ladeluft tritt in die Rohre 21, 22 ein, zwischen den sich ein Spalt 25 befindet, der in entgegengesetzter Richtung von Kühlmittel durchströmt wird. Die beiden Innenrippen 23, 24 sind gegenüber der Eintrittsebene 26 der Ladeluftrohre 21, 22 zurückgesetzt, d. h. es verbleibt jeweils eine rippenfreie Zone 27, 28. Infolge dessen ergibt sich ein reduzierter Wärmeeintrag, was durch jeweils einen Pfeil dargestellt ist. Das Kühlmittel wird daher im Bereich der rippenfreien Zonen 27, 28 weniger stark erwärmt, d. h. nicht unzulässig erhitzt. Insbesondere kann ein Sieden vermieden werden.

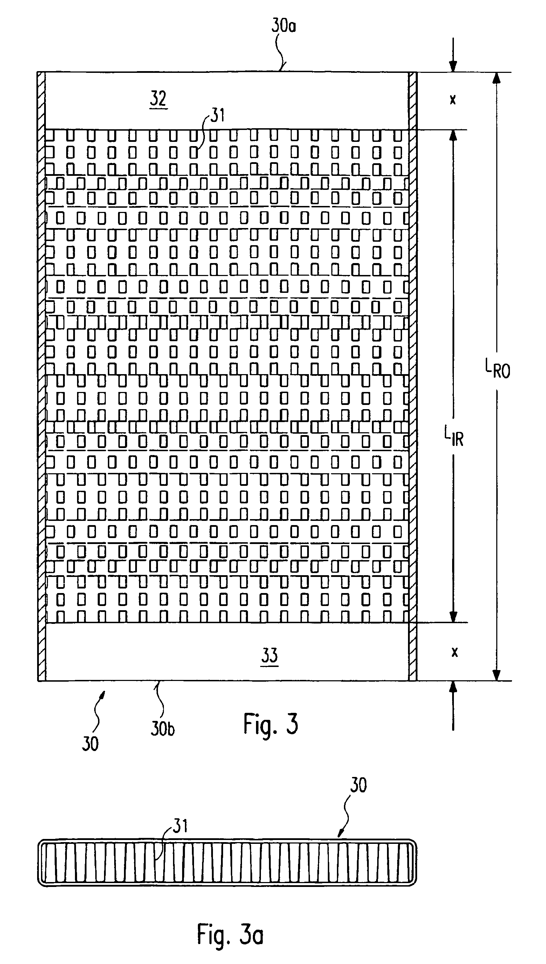

**Fig. 3** zeigt ein Flachrohr 30, in welchem eine Innenrippe 31 angeordnet ist, welche der Erhöhung der Wärmeübertragung auf der Ladeluftseite und einer Erhöhung der Innendruckfestigkeit des Flachrohres durch Verlötung mit der Innenwand des Flachrohres dient. Derartige Innenrippen, die mehrfach unterbrochen sind und versetzte Stege und Flanken aufweisen, sind aus dem Stand der Technik bekannt. Ebenso sind so genannte Kiemenrippen möglich, d. h. Wellrippen mit Kiemen.

**Fig. 3a** zeigt das Flachrohr 30 mit eingesetzter Innenrippe 31 in einer Draufsicht. Durch die mäanderförmige Ausbildung und die Verlötung der Innenrippe 31 an der Innenwand des Flachrohres ergibt sich eine gute Zugankerwirkung.

Das Flachrohr 30 ist Teil eines nicht dargestellten Stapels oder Rohrbündels eines Ladeluftkühlers, wie er beispielsweise durch die eingangs genannte DE-A 199 27 607 bekannt ist, welche vollumfänglich in den Offenbarungsgehalt der vorliegenden Anmeldung einbezogen wird. Die Flachrohre können somit endseitig miteinander verlötet sein, wodurch ein Rohrboden entfällt. Andererseits sind auch Ladeluftkühler möglich, bei welchen die Flachrohre in entsprechende Öffnungen eines Rohrbodens eingelötet werden.

Das Flachrohr 30 weist eine Länge L_{RO} in Längsrichtung, d. h. in Strömungsrichtung der Ladeluft auf. Die Innenrippe 31 weist dagegen eine Länge L_{IR} auf, welche um den Differenzbetrag 2x kürzer als die Länge L_{RO} des Flachrohres und gegenüber den Stirnkanten 30a, 30b des Flachrohres 30 um den Betrag x zurückgesetzt ist. In diesen Bereichen ergeben sich somit innenrippenfreie Zonen 32, 33. Bei einer bevorzugten Ausführungsform ist die Innenrippe jeweils um x = 10 mm zurückgesetzt, wobei die Länge L_{RO} des Flachrohres 30 etwa 100 bis 400 mm beträgt. Abweichungen je nach Strömungsführung sind möglich; beispielsweise müssen die innenrippenfreien Zonen 32, 33 nicht gleich sein, sondern können im Eintrittsbereich größer als im Austrittsbereich sein oder umgekehrt. Im Austrittsbereich der Ladeluft ist eine Verkürzung nicht notwendig; allerdings wird wegen einer vereinfachten Fertigung eine beiderseitige Verkürzung bevorzugt.

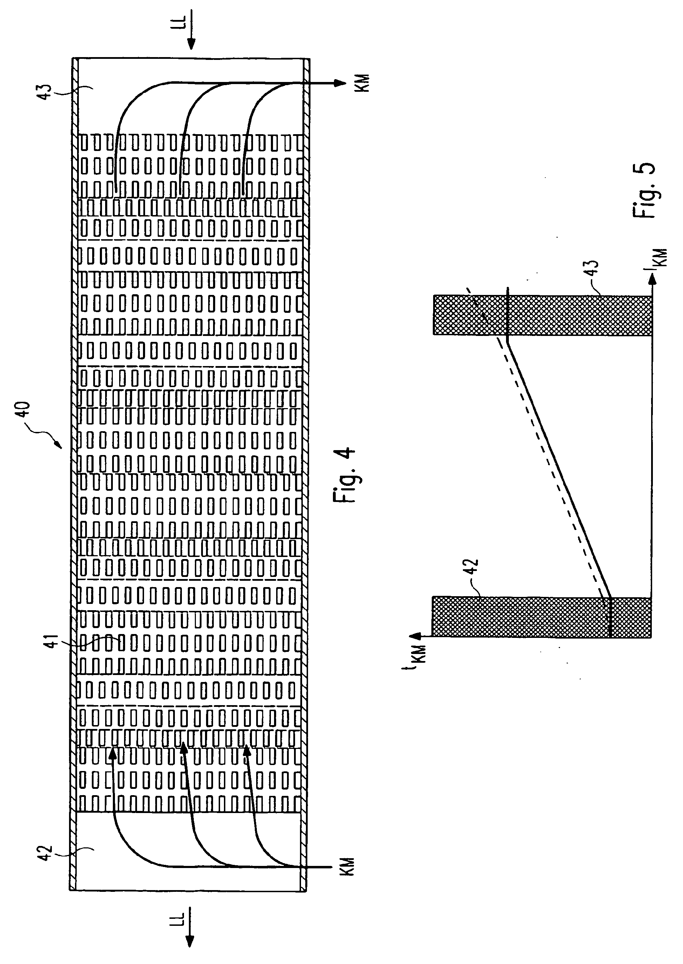

**Fig. 4** zeigt ein von Ladeluft durchströmbares Flachrohr 40, in welchem eine Innenrippe 41 angeordnet ist, welche erfindungsgemäß zurückgesetzt ist und im Ein- und Austrittsbereich innenrippenfreie Zonen 42, 43 bildet. Die Strömung der Ladeluft (innerhalb des Flachrohres 40) ist durch zwei Pfeile LL dargestellt, die Strömung des Kühlmittels (außerhalb des Flachrohres 40) ist durch Pfeile KM dargestellt. Das Kühlmittel wird im ladeluftseitigen Austrittsbereich des Flachrohres 40 zunächst quer im Bereich der innenrippenfreien Zone 42 zugeführt, wird dann in Längsrichtung und entgegen der Strömungsrichtung der Ladeluft umgelenkt, gelangt im ladeluftseitigen Eintrittsbereich in die innenrippenfreie Zone 43, wird dort in eine Querströmung umgelenkt und verlässt das nicht dargestellte Gehäuse des Ladeluftkühlers. Ladeluft und Kühlmittel sind somit im Gegenstrom zueinander geführt - wie dies auch in der DE-A 199 27 607 der Anmelderin beschrieben ist.

Bei einem bevorzugten Ausführungsbeispiel weist die Ladeluft bei ihrem Eintritt in die innenrippenfreie Zone 43 etwa eine Temperatur von 200 Grad Celsius auf, während das Kühlmittel in diesem Bereich bereits eine Temperatur von 90 Grad bis 100 Grad Celsius erreicht hat - im Gegensatz zu seiner Eintrittstemperatur in der rippenfreien Zone 42 von nur etwa 50 Grad Celsius. Da das Kühlmittel somit im Eintrittsbereich der Ladeluft bereits sehr nahe an seiner Siedetemperatur ist, darf es nur noch minimal erwärmt werden, was durch die erfindungsgemäße innenrippenfreie Zone 43 erreicht wird.

**Fig. 5** zeigt ein Diagramm, bei welchem die Kühlmitteltemperatur t_{KM} über dem Strömungsweg I_{KM} des Kühlmittels aufgetragen ist. Die innenrippenfreien Zone 42, 43 gemäß Fig. 4 sind in am Anfang und Ende des Strömungsweges als grau angelegte Streifen dargestellt. Die punktierte Linie repräsentiert den Stand der Technik gemäß Fig. 1, d. h. mit einer durchgehenden Innenrippe 3, 4, während die durchgezogene Linie den Temperaturverlauf mit erfindungsgemäß zurückgesetzter Innenrippe darstellt. Man erkennt aus diesem Diagramm, dass die Kühlmitteltemperatur im Bereich der rippenfreien Zonen (graue Streifen) konstant bleibt, d. h. die Kühlmitteltemperatur steigt erst im Bereich der Innenrippe an und bleibt also nach Verlassen des Bereichs der Innenrippe, d. h. im Bereich der rippenfreien Zone 43 konstant. Hier, d. h. im Eintrittsbereich der Ladeluft, erweist sich die rippenfreie Zone als besonders vorteilhaft, da anderenfalls (vgl. punktierte Linie) die Kühlmitteltemperatur erheblich ansteigen und ein Sieden eintreten würde.

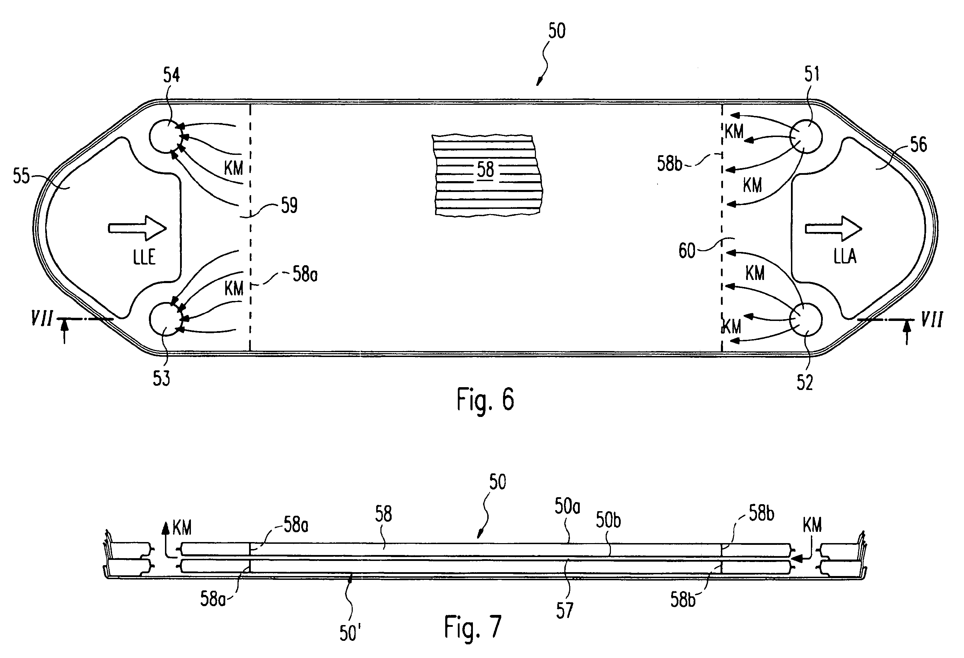

**Fig. 6** zeigt als weiteres Ausführungsbeispiel der Erfindung eine so genannte Stapelscheibe 50, die Teil eines Stapels eines nicht dargestellten Stapelscheibenwärmeübertragers ist, dessen Bauweise z. B. durch die eingangs genannte DE 195 11 991 A1 der Anmelderin bekannt ist. Die Stapelscheibe 50 weist zwei Eintrittsöffnungen 51, 52 für ein flüssiges Kühlmittel und zwei Austrittsöffnungen 53, 54 auf. Das Kühlmittel strömt somit in der Zeichnung von rechts nach links. Die Stapelscheibe 50 weist ferner eine Eintrittsöffnung 55 für die Ladeluft und eine Austrittsöffnung 56 für die Ladeluft auf. Die Ladeluft strömt somit in der Zeichnung von links nach rechts, dargestellt durch die Pfeile LLE und LLA, während die Strömung des Kühlmittels durch Pfeile mit der Bezeichnung KM dargestellt ist. Beide Medien strömen somit im Gegenstrom.

**Fig. 7** zeigt einen Schnitt entlang der Linie VII-VII durch die Kühlmitteleintrittsöffnung 52 und die Kühlmittelaustrittsöffnung 53. Die Stapelscheibe 50 bildet einen Strömungskanal für die Ladeluft und besteht aus einer oberen Scheibe 50a und einer unteren Scheibe 50b, welche randseitig und im Bereich der Kühlmittelöffnungen 51 bis 54 dicht verlötet sind. Zwischen zwei Stapelscheiben 50, 50' ist ein Spalt 57 angeordnet, welcher entsprechend den Pfeilen KM von Kühlmittel durchströmt wird. Die Höhe des Kühlmittelspaltes 57 ist kleiner als die Kanalhöhe einer Ladeluft führenden Stapelscheibe 50. In der Stapelscheibe 50 ist eine Innenrippe 58 (s. a. Fig. 6) angeordnet, welche in Richtung der Ladeluftströmung LLE eine Anströmkante oder Vorderkante 58a und eine Hinter- bzw. Abströmkante 58b aufweist. Die durch die Eintrittsöffnung 55 einströmende heiße Ladeluft strömt also, der Richtung des Pfeils LLE folgend, zunächst zwischen den beiden Kühlmittelaustrittsöffnungen 53 54 hindurch in eine innenrippenfreie Zone 59 und trifft danach auf die Vorderkante 58a der Innenrippe 58. Somit tritt - wie bei den vorherigen Ausführungsbeispielen beschrieben - in diesem innenrippenfreien Bereich 59 ein verminderter Wärmeaustausch zwischen heißer Ladeluft und Kühlmittel auf. Im Austrittsbereich der Ladeluft befindet sich ebenfalls eine innenrippenfreie Zone 60 hinter der Abströmkante 58b.

## Patentansprüche

1. Ladeluftkühler für Kraftfahrzeuge mit von Ladeluft durchströmbaren, Innenrippen aufweisenden Strömungskanälen (30, 40, 50), insbesondere Flachrohren oder Stapelscheiben, welche von einem flüssigen Kühlmittel, insbesondere im Gegenstrom umströmbar sind, wobei die Strömurigskanäle Ein- und Austrittsquerschnitte für die Ladeluft und zwischen den Ein- und Austrittsquersshnitten eine Länge L_{RO} aufweisen, wobei die innenrippen (31, 41, 58) in den Strömungskanälen (30, 40, 50) jeweils eine Längserstreckung L_{IR} aufweisen, die kleiner als die Länge L_{RO} ist und wobei im Eintritts- und/oder Austrittsbereich der Strömungskanäle (30, 40, 50) jeweils eine innenrippenfreie Zone (32, 33; 42, 43; 59, 60) belassen ist, **dadurch gekennzeichnet, dass** die innenrippenfreie Zone (32, 33; 42, 43; 59, 60) in Strömungsrichtung der Ladeluft eine Länge x aufweist, die wie folgt bemessen ist: 5 ≤ x ≤ 15 mm, insbesondere x ≈ 10 mm.

2. Ladeluftkühler nach Anspruch 1, **dadurch gekennzeichnet, dass** das Kühlmittel im Bereich der innenrippenfreien Zonen (42, 43) quer zur Ladeluftströmung geführt ist.

## Claims

1. A charge-air cooler for motor vehicles, comprising flow channels (30, 40, 50) through which charge air can flow and which have inside ribs, particularly flat tubes or stacked plates, around which a liquid coolant can flow, particularly in a countex-current, the flow channels having inlet and outlet cross-sections for the charge air and a length L_{RD} between the inlet and outlet cross-sections, the inside ribs (31, 41, 58) in the flow channels (30, 40, 50) having a longitudinal extension L_{IR} that is smaller than the length L_{RD}, and an inside rib-free zone (32, 33 ; 42, 43 ; 59, 60) remaining in the inlet and/or outlet regions of the flow channels (30, 40, 50), **characterized in that**, in the flow direction of the charge air, the inside rib-free zone (32, 33 ; 42, 43 ; 59, 60) has a length x, which has the following dimensions :
5 ≤ x ≤ 15 mm, in particular x ≈ 10 mm.

2. The charge-air cooler according to claim 1, **characterized in that** the coolant is conducted transversely to the charge air flow in the region of the inside rib-free zone (42, 43).

## Revendications

1. Refroidisseur d'air de suralimentation pour des véhicules automobiles, comprenant des conduits d'écoulement (30, 40, 50) pouvant être traversés par de l'air de suralimentation et présentant des ailettes intérieures, comprenant en particulier des tubes plats ou des planques empilées qui peuvent être baigné(e)s par un moyen de refroidissement liquide, en particulier dans le flux opposé, où les conduits d'écoulement présentent des sections d'entrée et de sortie pour l'air de suralimentation et, entre les sections d'entrée et de sortie, présentent une longueur L_{RO}, ou les ailettes intérieures (31, 41, 58) présentent à chaque fois, dans les conduits d'écoulement (30, 40, 50), une étendue en longueur L_{IR} qui est inférieure à la longueur L_{RO} et où une zone sans ailettes intérieures (32, 33 ; 42, 43 ; 59, 60) est laissée à chaque fois dans le secteur d'entrée et / ou de sortie des conduits d'écoulement (30, 40, 50),
**caractérisé en ce que** la zone sans ailettes intérieures (32, 33 ; 42, 43 ; 59, 60) présente une longueur x dans la direction d'écoulement de l'air de suralimentation, longueur qui est dimensionnée comme suit : 5 mm ≤ x ≤ 15 mm, en particulier x ≈ 10 mm.

2. Refroidisseur d'air de suralimentation selon la revendication 1, **caractérisé en ce que** le moyen de refroidissement, dans le secteur des zones sans ailettes intérieures (42, 43), est guidé de façon transversale par rapport à l'écoulement de l'air de suralimentation.
